Europäisches Patentamt

European Patent Office

Office européen des brevets

(11) Publication number: 0 516 973 A1

# EUROPEAN PATENT APPLICATION

(21) Application number: 92107334.2

(22) Date of filing: 29.04.92

(51) Int. Cl.5: F16C 19/52, G01P 3/44

(30) Priority: 03.05.91 IT TO910099 U

(43) Date of publication of application:
09.12.92 Bulletin 92/50

(84) Designated Contracting States:
DE FR GB SE

(71) Applicant: SKF INDUSTRIE S.P.A.
Corso Vittorio Emanuele II No. 48
I-10128 Torino(IT)

(72) Inventor: Bertetti Paolo
Lungo Po Antonelli, 163
10153 Torino(it)
Inventor: Peretti Pietro
Via Andrea Doria, 3
10060 Piscina(it)

(74) Representative: Plebani, Rinaldo et al
c/o Studio Torta, Via Viotti 9
I-10121 Torino(IT)

(54) Rolling bearing with a rotation detecting device, and relative assembly unit.

(57) A bearing (7) having an inner ring (11, 12) fitted with a signal generating wheel (19), and an outer ring (9) fitted with a sensor (21) enclosed in a shield consisting of a sleeve (24) having a slot (27) housing the sensor (21), and a rib (31) for protecting the signal generating wheel (19). The sleeve (24) is made of elastomeric or plastic material, and is fitted to the outer ring (9) by means of a bush (33) enabling a certain amount of slide of the sleeve (24) in relation to the support (14). The bearing (7) is packed in an assembly unit (6) comprising a packing sleeve (47), which is placed inside the bearing (7) and presents a flange (49) having a seat (53) for the electric connector (23) of the sensor (21), for enabling coaxial stacking of the units (6). The flange (49) presents an element (52) for enabling troublefree removal of the unit (6) off the stack.

Fig.1

The present invention relates to a rolling bearing with a rotation detecting device, for a member rotating in relation to a support; and to the relative assembly unit.

The rotation detecting device on bearings of the aforementioned type normally comprises a signal generating or so-called sound wheel fitted to the rotary ring on the bearing, and having a number of signal generating elements detected by a proximity sensor fitted to the fixed ring on the bearing. Bearings of this type are especially suitable for vehicle hub carriers, and are connected to the axle shaft via a constant-velocity universal joint.

Known bearings of the aforementioned type present several drawbacks. In particular, the sensor cable, which is normally fitted with a connector, makes packing difficult, does not permit stacking of a number of assembly units, and involves difficulties when assembling the bearing on to the hub carrier. Moreover, prior to being assembled on to the hub carrier, the bearing must be so oriented as to accurately position the cable outlet.

It is an object of the present invention to provide a straightforward, low-cost rolling bearing and relative assembly unit, designed to overcome the aforementioned drawbacks typically associated with known bearings.

According to the present invention, there is provided a rolling bearing comprising a pair of coaxial rings between which is fitted a number of rolling elements, said device comprising a sensor fitted to a first of said rings, and a number of signal generating elements fitted to the other of said rings and detected by said sensor; characterized by the fact that said sensor is enclosed in a shield fitted to said first ring, for externally protecting said signal generating elements.

In addition, according to the present invention, the assembly unit of the bearing, the rotation detecting device of which includes an electric cable and connector, comprises a packing sleeve in which said bearing is inserted; and a flange having a seat housing said cable and said connector, and designed to enable coaxial stacking of a number of said assembly units.

A preferred, non-limiting embodiment of the present invention will be described by way of example with reference to the accompanying drawings, in which:

Fig.1 shows a partial diametrical section of a rolling bearing assembly unit in accordance with the present invention;

Fig.2 shows a partial diametrical section of the Fig.1 bearing mounted inside its seat;

Fig.3 shows an external view of a detail on the bearing;

Fig.4 shows a section along line IV-IV in Fig.3;

Fig.5 shows an enlarged partial section of a detail in Fig.1 at an intermediate assembly stage;

Fig.6 shows a section of a bearing assembly unit according to a variation of the present invention;

Fig.7 shows an enlarged partial section of a detail in Fig.6 at an intermediate assembly stage.

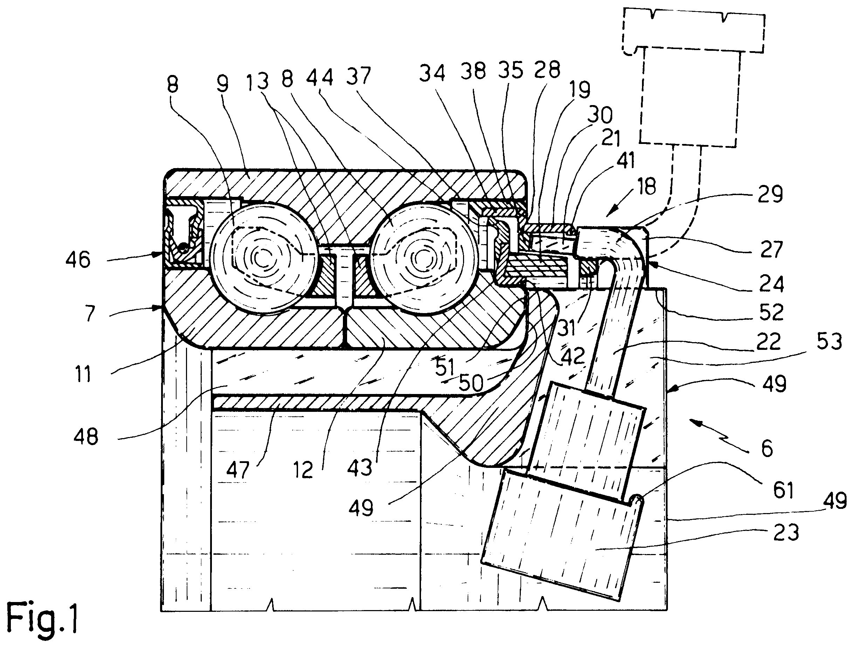

Number 6 in Fig.1 indicates an assembly unit of a rolling bearing 7 having two rows of balls 8 between an outer ring 9 and two inner half rings 11, 12. Balls 8 and rings 9, 11, 12 are generally made of high tensile steel.

Each row of balls 8 presents a retainer 13, generally made of fiberglass-reinforced polyamide; and the surfaces of balls 8 contacting rings 9, 11, 12 are so arranged as to enable bearing 7 to withstand a given axial thrust in both directions.

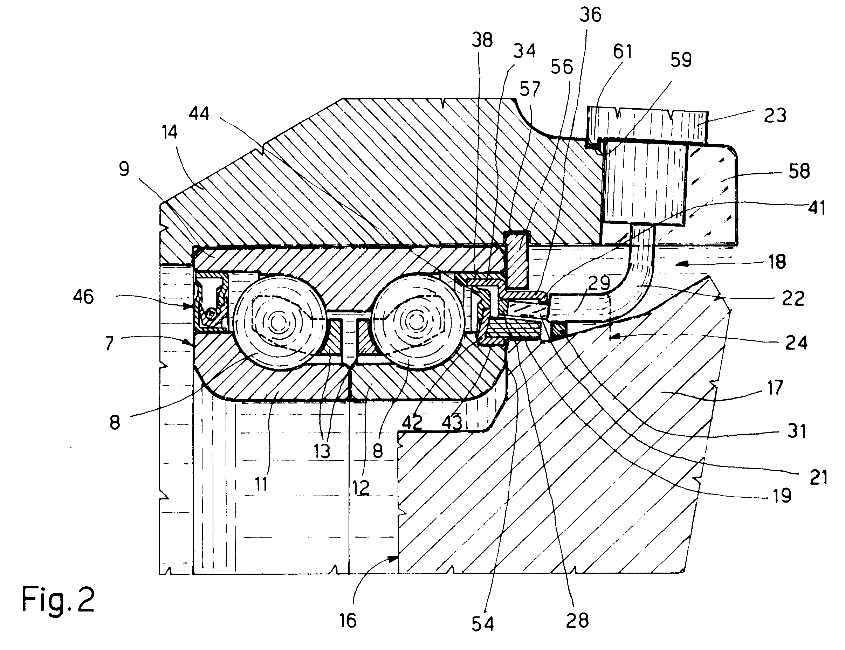

As shown more clearly later on, ring 9 is fitted to a fixed support or hub carrier 14 (Fig.2), and half rings 11, 12 to a rotary member 16, such as a vehicle wheel hub connected in known manner to the axle shaft by a constant-velocity universal joint, the driven part of which is indicated by 17 in Fig.2.

Bearing 7 presents a rotation detecting device 18 substantially comprising a signal generating wheel 19 fitted to rotary half ring 12; and a proximity sensor 21 fitted to fixed ring 9. More specifically, wheel 19 may be made of magnetic material having a number of magnetized portions arranged at predetermined intervals and constituting a number of signal generating elements; or of nonmagnetic material, with a number of teeth or metal inserts constituting said signal generating elements.

Accordingly, sensor 21 may be either an induction or Hall effect type. Whichever the case, sensor 21 is connected by a flexible electric cable 22 with a connector 23 to the wiring and electronic control system on the vehicle.

According to the present invention, device 18 is protected by a shield consisting of a substantially T-section sleeve 24 (Fig.s 3 and 4) of plastic or elastomeric material, the crosspiece 26 of which presents a slot 27 allowing of a connecting portion 28, and housing sensor 21 and a portion 29 of cable 22 (Fig.2).

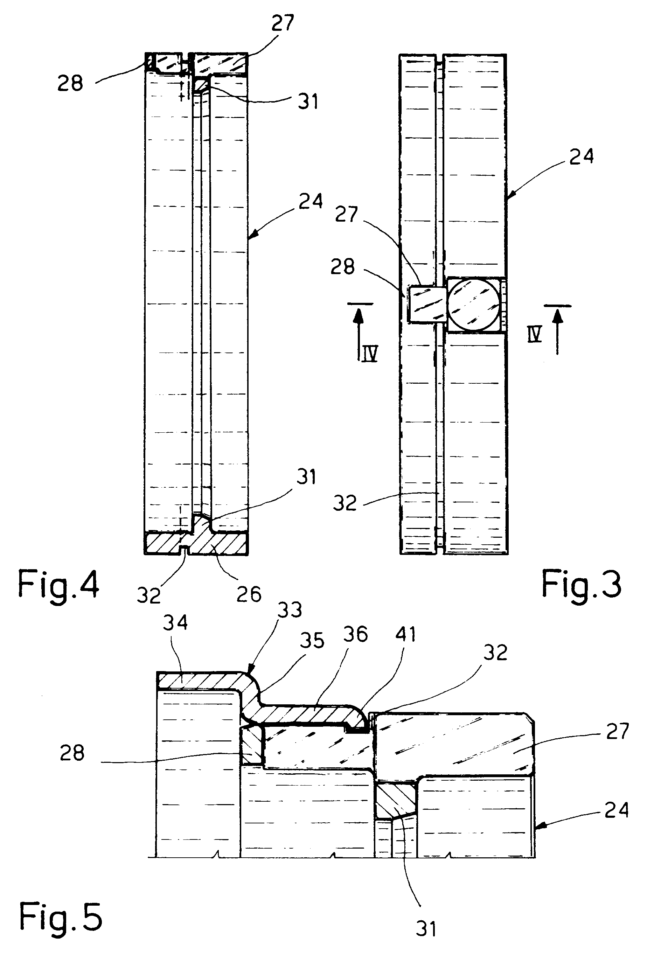

The leg of the T section of sleeve 24 consists of a radial rib 31 supporting portion 29 of cable 22, and sleeve 24 presents an outer annular groove 32 (Fig.4) substantially opposite rib 31.

Sleeve 24 is fitted to ring 9 by means of a metal bush 33 (Fig.5) having a large-diameter portion 34, a flat shoulder 35, and a small-diameter portion 36. Portion 34 of bush 33 is locked inside a seat 37 (Fig.1) on ring 9, and secured, for example, by means of a layer of rubber 38.

Portion 36 of bush 33 presents an inside diameter slightly smaller than the outside diameter of crosspiece 26 of sleeve 24, so as to compress the respective portion of crosspiece 26, and presents an edge 41 turned inwards for engaging groove 32 on sleeve 24, while at the same time enabling sleeve 24 to be positioned angularly in relation to bush 33, which is integral with outer ring 9.

Pulse generating wheel 19 is fitted to inner half ring 12 of bearing 7 by means of an annular L section 42, e.g. of stainless metal, fitted inside a seat 43 on half ring 12, and having an annular lip 44 of elastic material, the outer end of which engages the inner surface of portion 34 of bush 33.

Thus, crosspiece 26 of sleeve 24 protects sensor 21; rib 31 protects the entire circumference of wheel 19; and lip 44 provides for sealing between outer ring 9 and inner half ring 12 of bearing 7. A known seal 46 is provided between outer ring 9 and half ring 11.

Bearing 7 is packed in the form of assembly unit 6 by inserting, inwards of half rings 11 and 12, a retainer consisting of a plastic sleeve 47 having a number of axial grooves forming a number of teeth 48 for engaging the inner surface of half rings 11 and 12.

Sleeve 47 also presents a flange 49 having a shoulder 50 engaging end surface 51 of half ring 12. Flange 49 is substantially thicker than the length of sleeve 24, so as to form a step 52 in relation to the same, and presents a radial recess 53 for seating cable 22 and connector 23 when cable 22 is bent as shown by the continuous line in Fig.1.

Assembly units 6 so formed are stackable coaxially for enabling efficient packing inside appropriate containers. The width of flange 49 is such as to leave a space corresponding to step 52 between one bearing 7 and the next, which, in addition to shockproofing, also provides, at assembly, for troublefree pickup and removal of units 6 by the operator.

The assembly seat of bearing 7 comprises a shoulder 54 (Fig.2) on the driven part 17 of the joint, the radial dimension of which provides for supporting both surface 51 of half ring 12 and section 42, and the outside diameter of which provides for supporting signal generating wheel 19.

The seat of bearing 7 also comprises a metal ring 56 inserted in known manner inside groove 57 on support 14, and of such a width as to contact both ring 9 and shoulder 35 of bush 33. Support 14 presents a seat 58 for connector 23, and a groove 59 for receiving a tooth 61 on connector 23.

At assembly, connector 23 is first removed from seat 53 (Fig.1) and positioned as shown by the dotted line, after which, bearing 7 is removed from sleeve 47 and fitted inside its seat, more specifically, with outer ring 9 and shoulder 35 of bush 33 against metal ring 56, and half ring 12 and section 42 against shoulder 54.

Connector 23 is then inserted inside seat 58, with tooth 61 inside groove 59 (Fig.2), and, finally, ring 9 and half rings 11, 12 are locked in known manner to support 14 and rotary member 16 respectively.

It should be noted that, in the event of ring 9 sliding slightly in relation to support 14, sleeve 24 together with sensor 21 also slides accordingly in relation to bush 33, thus preventing any possibility of damage to device 18.

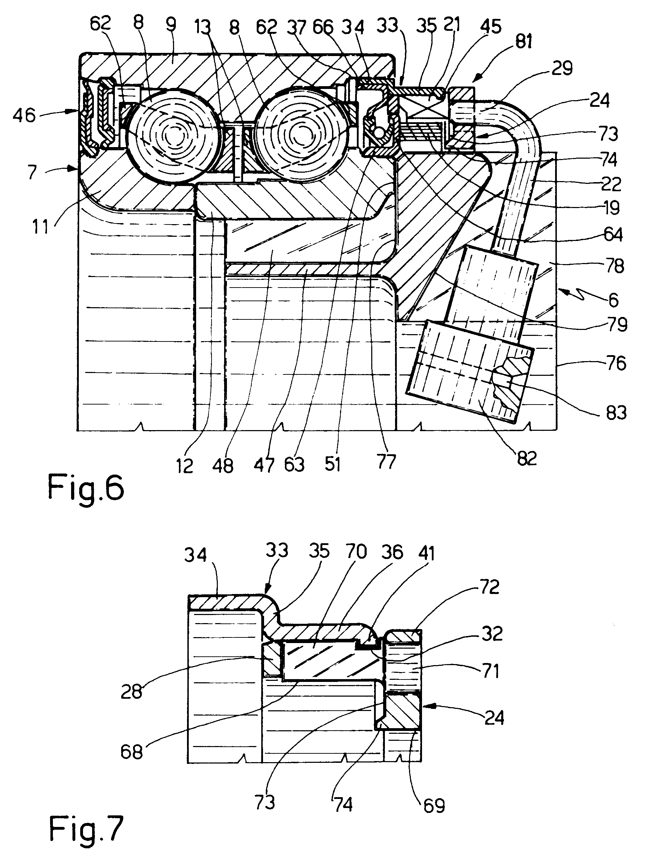

In the Fig.6 variation, the component parts of which similar to those of Fig.1 are indicated using the same numbering system with no further description, ball retainers 13 present a crosspiece 62 fully enclosing balls 8, and bush 33 is fitted pneumatically and directly inside seat 37 on outer ring 9.

Inner half ring 12 is fitted with an annular L section 63 of stainless metal, comprising a substantially flat wall 64 against which signal generating wheel 19 rests axially. Portion 34 of bush 33 is fitted with a seal consisting of a rigid annular section 66 with an annular lip 67 of elastic material cooperating in sealing manner with flat wall 64.

Sleeve 24 presents a thick portion 69 (Fig.7) and a thin portion 68 having a slot 70 for housing sensor 21, and groove 32 engaging edge 41 of bush 33.

At slot 70, portion 69 presents a hole 71 closed externally by a portion 72 and inside which portion 29 of cable 22 of sensor 21 is inserted (Fig.6). Portion 69 also presents an annular groove 73 facing wheel 19 and defined by an axially-projecting inner rib 74, which, together with groove 73, provides for effectively protecting wheel 19.

Packing sleeve 47 presents a flange 76 having a flat surface 77, the peripheral portion of which engages end surface 51 of half ring 12. Flange 76 comprises a radial recess 78 for seating cable 22 when idle, and defined by an inclined surface 79, thus forming an ample surface 81 for also protecting wheel 19 and sleeve 24 in the region of slot 70.

Finally, cable 22 presents a connector 82 having, in place of tooth 61 on connector 23, a seat 83 for a screw for assembling it to hub carrier 14 (Fig.2). The greater thickness of flange 76 as compared with sleeve 24 provides, at assembly, for troublefree pickup and removal of unit 6 according to the Fig.6 and 7 variation, bearing 7 of which is assembled in exactly the same way as described with reference to Fig.s 1-5.

The advantages of rolling bearing 7 and assembly unit 6 according to the present invention will be clear from the foregoing description. In particular, sleeve 24 provides for safe in-service protection of rotation detecting device 18, and assembly unit 6 for troublefree packing, transport, pickup and seating of bearing 7.

To those skilled in the art it will be clear that changes may be made to the bearing and assembly unit as described and illustrated herein without, however, departing from the scope of the present invention. For example, bearing 7 may be a roller instead of a ball bearing, or present one instead of two rows of rolling elements.

Moreover, outer ring 9 of bearing 7 may be fitted to the rotary member, and inner ring 11, 12 to the fixed support, in which case, sensor 21 will obviously be fitted to the inner ring.

Finally, various changes may be made to the packing, for example, for enabling sleeves 47 to be fitted one inside the other.

**Claims**

1. A rolling bearing with a rotation detecting device, for a member rotating in relation to a support; said bearing comprising a pair of coaxial rings (9 and 11, 12) between which is fitted a number of rolling elements (8); and said device (18) comprising a sensor (21) fitted to a first (9) of said rings (9 and 11, 12), and a number of signal generating elements (19) fitted to the other (11, 12) of said rings (9 and 11, 12) and detected by said sensor (21); characterized by the fact that said sensor (21) is enclosed in a shield (24) fitted to said first ring (9), for externally protecting said signal generating elements (19).

2. A bearing as claimed in Claim 1, wherein said signal generating elements are supported on a wheel (19) fitted to said other ring (11, 12); characterized by the fact that said shield consists of a sleeve (24) having a seat (27, 70) housing said sensor (21); and that said sleeve (24) comprises an annular element (31, 74) for protecting said signal generating elements and said wheel (19).

3. A bearing as claimed in Claim 2, characterized by the fact that said sleeve (24) is made of plastic or elastomeric material, and is fitted to said first ring (9) in airtight manner by means of a tubular metal element (33).

4. A bearing as claimed in Claim 3, characterized by the fact that at least part of said sleeve (24) is compressed radially by a portion (36) of said tubular element (33); said tubular element (33) also presenting an elastic edge (41); and said sleeve (24) presenting, on a surface opposite said annular element (31, 74), an annular groove (32) engaged by said elastic edge (41).

5. A bearing as claimed in Claim 4, characterized by the fact that said elastic edge (41) engages said annular groove (32) in such a manner as to enable the angular position of said sleeve (24) to be varied in relation to said tubular element (33).

6. A bearing as claimed in Claim 4 or 5, wherein said sensor (21) is connected to an electric cable (22); characterized by the fact that said sleeve (24) presents a slot (27, 70) housing said sensor (21).

7. A bearing as claimed in Claim 6, characterized by the fact that, at said slot (27, 70), said sleeve (24) also comprises a seat housing a portion (29) of said cable (22).

8. A bearing as claimed in Claim 6 or 7, characterized by the fact that said sleeve (24) presents a T-shaped section, the crosspiece (26) of which presents said slot (27) and said seat; said annular element consisting of a rib (31) constituting the leg of said T-shaped section.

9. A bearing as claimed in Claim 6 or 7, characterized by the fact that said sleeve (24) comprises a first thin portion (68) and a second thick portion (69); said first portion (68) presenting said slot (70); said seat consisting of an axial hole (71) in said second portion (69); and said annular element consisting of a rib (74) projecting axially from said second portion (69).

10. A bearing as claimed in one of the foregoing Claims from 3 to 9, characterized by the fact that said wheel (19) is fitted to said other ring (11, 12) by means of an annular section (42, 63); an annular sealing lip (44, 64) being provided between said tubular element (33) and said annular section (42, 63).

11. A bearing as claimed in Claim 10, characterized by the fact that said rotary member (16, 17) presents a shoulder (54) for circumferentially supporting said wheel (19) and axially supporting said annular section (43, 63).

12. A bearing as claimed in Claims 7 and 11, wherein said cable (22) is connected to an electric connector (23, 82); characterized by the fact that said connector (23, 82) presents means (61, 83) for securing it to said support (14); said cable (22) being bendable between a packed position and an assembly position on said support (14).

**13.** A bearing as claimed in Claim 12, characterized by the fact that it is packed inside a stackable retainer (47) having a seat (53, 78) for said connector (23, 82).

**14.** An assembly unit for a roller bearing comprising a rotation detecting device (18) having an electric cable (22) and a connector (23, 82); characterized by the fact that it comprises a packing retainer (47) in which said bearing (7) is inserted, and which presents a flange (49, 76) having a seat (53, 78) housing said cable (22) and said connector (23, 82); said flange (49, 76) being designed to enable coaxial stacking of a number of said units.

**15.** A unit as claimed in Claim 14, wherein said bearing (7) comprises an outer ring (9), an inner ring (11, 12), and a number of rolling elements (8); characterized by the fact that said retainer comprises a sleeve (47) of plastic material having a number of teeth (48) for engaging said inner ring (11, 12); said flange (49, 76) forming one piece with said sleeve (47) and presenting a shoulder (50, 77) engaging an end surface (51) of said inner ring (11, 12).

**16.** A unit as claimed in Claim 14 or 15, characterized by the fact that said flange (49, 76) presents means (52, 76) enabling troublefree pickup and removal of said unit from said stack.

Fig.1

EP 0 516 973 A1

Fig.2

Fig.4

Fig.3

Fig.5

EP 0 516 973 A1

Fig.6

Fig.7

9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 464 405 (SKF INDUSTRIE S.P.A.)<br>* the whole document *<br>--- | 1,10 | F16C19/52<br>G01P3/44 |
| A | EP-A-0 426 298 (SSI TECHNOLOGIES, INC.)<br>* column 3, line 30 - column 4, line 39; figure 9 *<br>--- | 1,2 | |
| A | EP-A-0 453 331 (S.N.R. ROULEMENTS)<br>* the whole document *<br>--- | 4-7,12 | |
| A | US-A-5 010 290 (D.A. FOSTER)<br>--- | | |
| A | EP-A-0 394 083 (S.N.R. ROULEMENTS)<br>----- | | |

TECHNICAL FIELDS SEARCHED (Int. Cl.5)

F16C
G01P

The present search report has been drawn up for all claims

| Place of search | Date of completion of the search | Examiner |
|---|---|---|
| BERLIN | 21 JULY 1992 | HOFFMANN M. |

EPO FORM 1503 03.82 (P0401)